# EUROPEAN PATENT APPLICATION

(11) **EP 3 217 254 A1**
(43) Date of publication of application: **13.09.2017**
(21) Application number: 15857415.2
(22) Date of filing: 13.08.2015
(51) Int. Cl.: G06F 3/01

(54) **ELECTRONIC DEVICE AND OPERATION METHOD THEREOF**

(30) Priority: 06.11.2014 CN 201410638408; 12.08.2015 KR 20150113854
(71) Applicant: Samsung Electronics Co., Ltd., Gyeonggi-do 16677 (KR)
(72) Inventor: YAN, Chao, Beijing 100020 (CN); LI, Zhixuan, Beijing 100020 (CN); HUANG, Ying, Beijing 100020 (CN); XIONG, Junjun, Beijing 100020 (CN); WANG, Qiang, Beijing 100020 (CN)
(74) Representative: Gulde & Partner
(86) International application number: PCT/KR2015/008471
(87) International publication number: WO 2016/072595

(57) **Abstract**

An electronic apparatus includes a memory; a display unit; and a controller configured to acquire emotional expression information indicating an emotion of a user, acquire emotional stimulus source information indicating a cause of the emotion, correlate the emotional expression information with the emotional stimulus source information, store the correlated emotional expression information and emotional stimulus source information in the memory, and display the emotional expression information and the emotional stimulus source information on the display unit.

## Description

### TECHNICAL FIELD

The present disclosure relates to the field of computer technology, particularly to the field of human-computer interaction technology, and more particularly, to an electronic apparatus and an operation method thereof.

### BACKGROUND ART

With continuous developments in science and technology, the pace of people's lives is becoming increasingly fast, which causes people to spend less time and effort paying attention to their own emotional changes. Therefore there is a need for some supplementary means to help people record the relevant status of their emotional changes.

### DETAILED DESCRIPTION OF THE INVENTION

### TECHNICAL SOLUTION

An embodiment of the present disclosure includes an electronic apparatus including a memory; a display unit; and a controller configured to acquire emotional expression information indicating an emotion of a user, acquire emotional stimulus source information indicating a cause of the emotion, correlate the emotional expression information with the emotional stimulus source information, store the correlated emotional expression information and emotional stimulus source information in the memory, and display the emotional expression information and the emotional stimulus source information on the display unit.

### ADVANTAGEOUS EFFECTS OF THE INVENTION

The present disclosure provides an electronic apparatus for monitoring emotions and an operation method thereof.

### DESCRIPTION OF THE DRAWINGS

After reading the detailed description of non-limiting embodiments with reference to the accompanying drawings, those of ordinary skill in the art will recognize that other features, objections and advantages of the present application become more apparent.
FIG. 1 is a schematic diagram of recording emotional information;
FIG. 2 is a flowchart illustrating a method of monitoring emotions, according to an embodiment of the present application;
FIG. 3 is a schematic diagram of an application scene of the embodiment shown in FIG. 2;
FIG. 4 is a flowchart illustrating a method of monitoring emotions, according to another embodiment of the present application;
FIG. 5 is a flowchart illustrating a method of monitoring emotions, according to another embodiment of the present application;
FIG. 6 is a schematic diagram of an application scene of the embodiment shown in FIG. 5;
FIG. 7A is a schematic diagram of an application scene of an embodiment;
FIG. 7B is another schematic diagram of an application scene of an embodiment;
FIG. 8 is a flowchart illustrating a method of monitoring emotions, according to another embodiment of the present application;
FIG. 9 is a schematic diagram of an application scene of the embodiment shown in FIG. 8;
FIG. 10 is a configuration diagram illustrating an apparatus for monitoring emotions, according to an embodiment of the present application;
FIG. 11 is a configuration diagram illustrating an apparatus for monitoring emotions, according to another embodiment of the present application;
FIG. 12 is a configuration diagram illustrating an apparatus for monitoring emotions, according to another embodiment of the present application;
FIG. 13 is a configuration diagram illustrating an apparatus for monitoring emotions, according to another embodiment of the present application;
FIG. 14 is a block diagram illustrating a configuration of an electronic apparatus according to some embodiments; and
FIG. 15 is a block diagram illustrating another configuration of the electronic apparatus of FIG. 14.

### BEST MODE

An embodiment of the present disclosure includes an electronic apparatus including a memory; a display unit; and a controller configured to acquire emotional expression information indicating an emotion of a user, acquire emotional stimulus source information indicating a cause of the emotion, correlate the emotional expression information with the emotional stimulus source information, store the correlated emotional expression information and emotional stimulus source information in the memory, and display the emotional expression information and the emotional stimulus source information on the display unit.

The controller may display content indicating emotions of the user over time on the display unit.

The electronic apparatus may further include: a user input unit configured to receive a user input selecting a specific time from the content, wherein the controller displays the emotional expression information and the emotional stimulus source information that are related to the selected time on the display unit.

The controller may acquire the emotional stimulus source information based on at least one of multimedia information, environmental information, and physiological signal information of the user, and wherein the multimedia information comprises at least one of text information, image information, audio information and video information.

The controller may acquire the emotional expression information based on at least one of the multimedia information and the physiological signal information.

The electronic apparatus may further include: a communication unit configured to communicate with at least one of a server and a second electronic apparatus used by a second user, wherein the controller acquires at least one of second emotional expression information indicating an emotion of the second user associated with the user and second emotional stimulus source information indicating a cause of the emotion of the second user based on the multimedia information and controls the communication unit to share at least one of the second emotional expression information and the second emotional stimulus source information with the second user.

The controller may receive at least one of third emotional expression information indicating an emotion of the user and third emotional stimulus source information corresponding to the third emotional expression information, shared by the second user, through the communication unit and combines the emotional expression information and the emotional stimulus source information and at least one of the third emotional expression information and the third emotional stimulus source information.

After storing the correlated emotional expression information and emotional stimulus source information in the memory, the controller may monitor a change of an emotional type and a change of an emotional intensity regarding the emotion of the user, and, if the emotional type does not change and the change of the emotional intensity exceeds a threshold, update the emotional expression information and the emotional stimulus source information.

The controller may normalize the emotional intensity.

The controller may acquire emotional managing recommendation information based on the emotional expression information and the emotional stimulus source information and displays the emotional managing recommendation information on the display unit.

An embodiment of the present disclosure includes a method of operating an electronic apparatus, the method including: acquiring emotional expression information indicating an emotion of a user; acquiring emotional stimulus source information indicating a cause of the emotion; correlating the emotional expression information with the emotional stimulus source information; storing the correlated emotional expression information and emotional stimulus source information; and displaying the emotional expression information and the emotional stimulus source information.

The method may further include: displaying content indicating emotions of the user over time.

The method may further include: receiving a user input selecting a specific time from the content, wherein the displaying of the emotional expression information and the emotional stimulus source information comprises: displaying the emotional expression information and the emotional stimulus source information that are related to the selected time.

The acquiring of the emotional stimulus source information may include: acquiring the emotional stimulus source information based on at least one of multimedia information, environmental information, and physiological signal information of the user, and wherein the multimedia information comprises at least one of text information, image information, audio information and video information.

The acquiring of the emotional expression information may include: acquiring the emotional expression information based on at least one of the multimedia information and the physiological signal information.

The method may further include: acquiring at least one of second emotional expression information indicating an emotion of a second user associated with the user and second emotional stimulus source information indicating a cause of the emotion of the second user, based on the multimedia information; and sharing at least one of the second emotional expression information and the second emotional stimulus source information with the second user.

The method may further include: receiving at least one of third emotional expression information indicating an emotion of the user and third emotional stimulus source information corresponding to the third emotional expression information, shared by the second user; and combining the emotional expression information and the emotional stimulus source information and the at least one of the third emotional expression information and the third emotional stimulus source information.

The method may further include: after storing the correlated emotional expression information and emotional stimulus source information in the memory, monitoring a change of an emotional type and a change of an emotional intensity regarding the emotion of the user; and if the emotional type does not change and the change of the emotional intensity exceeds a threshold, updating the emotional expression information and the emotional stimulus source information.

The method may further include: acquiring emotional managing recommendation information based on the emotional expression information and the emotional stimulus source information; and displaying the emotional managing recommendation information.

### MODE OF THE INVENTION

The application is further described below in connection with the accompanying drawings and embodiments. It should be understood that the specific embodiments herein is used to explain the related invention, but not to limit the invention. In addition, only parts relating to the invention are illustrated in the drawings for the sake of convenience.

Various embodiments and features of the embodiments can be combined provided that there is no conflict. The application will be described below with reference to the accompanying drawings and the embodiments.

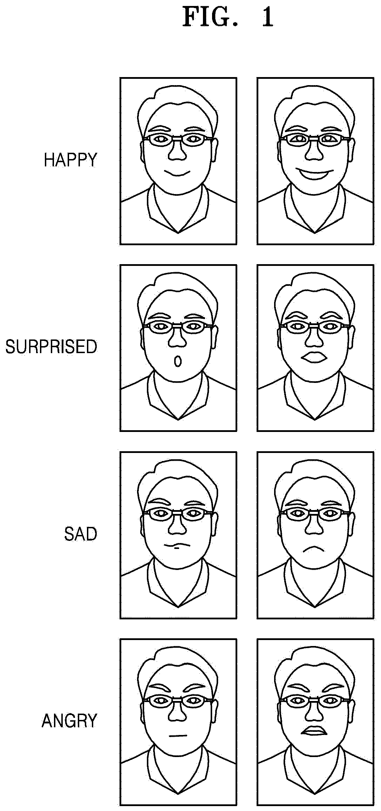

FIG. 1 is a schematic diagram of recording emotional information.

As shown in FIG. 1, different images of emotional states can be differentiated according to the emotional types, and a simple emotional tag such as "happy", "surprised", "sad", "angry" and so on can be attached to each emotional type. When recording emotional information of a user, the user's emotional state at a certain moment is acquired firstly, and then a related tag is attached to the acquired emotional state and the tagged emotional state is stored. However, using this way to record emotions, the user can only obtain a simple emotional tag but not manage and analyze the emotional changes effectively when recalling the emotion in future.

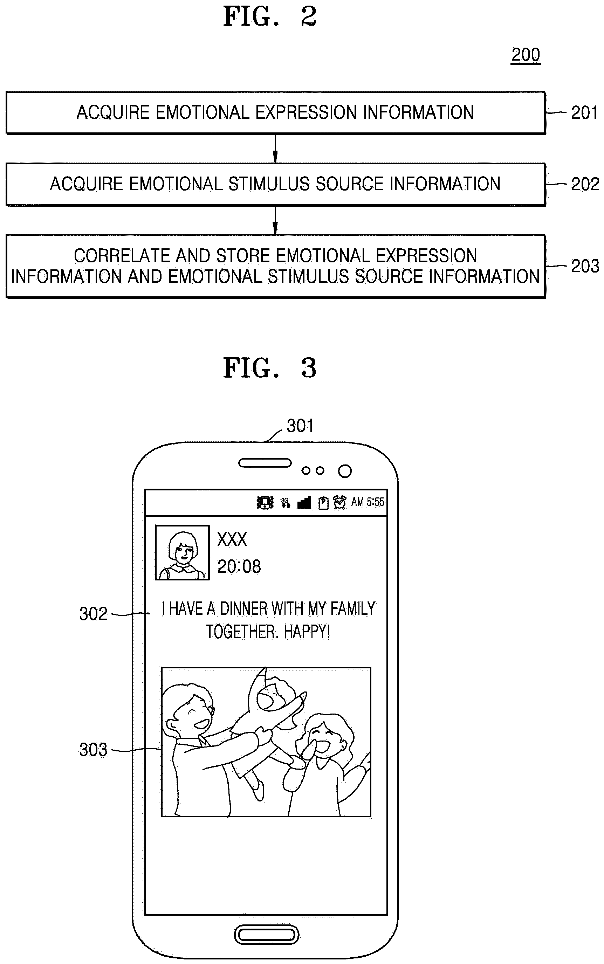

FIG. 2 illustrates a flowchart 200 illustrating a method of monitoring emotions according to an embodiment. In this embodiment, the method can be used in various terminals such as smart phones, smart televisions (TVs), tablet computers, portable laptop computers, desktop computers, wearable devices and so on. The method of monitoring emotions comprises following steps.

In step 201, emotional expression information of a user's current emotion is acquired.

In the present embodiment, the emotional expression information is external representation information which may reflect characteristics of a current emotion of a user and specifically include such information as a current facial expression of the user, body movement of the user, pronunciation and intonation of the voice of the user and an input text or speech expressing emotions of the user. The terminal could be provided with various information collecting devices such as a camera and a microphone, and could actively collect emotional expression information of a current emotion of the user or extract the emotional expression information from the user's input information such as the text and the speech, when acquiring the emotional expression information of the current emotion of the user.

In step 202, emotional stimulus source information of the current emotion is acquired.

In the present embodiment, the emotional stimulus source information may be information about causes which lead to the current emotion of the user. The causes may be various possible causes that stimulate the emotion of the user including a person, an object, an event, a sentence, an action and a combination thereof. When acquiring the emotional stimulus source information of the current emotion, all information currently acquired by the terminal can be analyzed and the emotional stimulus source information can be extracted.

In step 203, the emotional expression information is correlated with the emotional stimulus source information and the correlated emotional expression information and emotional stimulus source information are stored.

In the present embodiment, when correlating the emotional expression information with the emotional stimulus source information and storing the correlated emotional expression information and emotional stimulus source information, emotional expression information and emotional stimulus source information acquired at a time point or in a preset time period can be correlated according to a time relation of information acquisition, and the correlated emotional expression information and emotional stimulus source information can be stored in a storage of the terminal itself or an external device such as a cloud storage and a server.

For the above-mentioned embodiment of the application, FIG. 3 illustrates an application scene. As shown in FIG. 3, when a user publishes, by using a terminal 301, a text message 302 saying "Today I have a dinner with my family together. Happy!" on the personal homepage of a social platform and attaches a correlated photograph 303, the terminal 301 can obtain word information "Happy" representing a self-emotional expression from the message 302 and can also identify the user's smiling face from the photograph 303. The smiling face and the word information "Happy" are the emotional expression information of the current emotion of the user. At the same time, the terminal could also obtain event information "I have a dinner with my family together" from the text message 302 and further determine, by semantic analysis, that the event is the emotional stimulus source information of the current emotion. After that, the terminal can correlate the emotional expression information "Happy" and the smiling face in the photograph with the event information "I have a dinner with my family together" and store the correlated emotional expression information and event information, so that the user can know the reason why he was so happy was that he had a dinner with his family at that time when he looks at the smiling face later.

It should be pointed out that in the event that the emotional expression information is acquired from a user's biological characteristics such as a facial expression and voice, the user's biological characteristic information can be recorded before the acquiring the emotional expression information of the user's current emotion, so as to extract the emotional expression information which is correlated with the user from various currently collected information, wherein the biological characteristic information includes, but is not limited to, facial characteristic information, voiceprint information, iris information and physiological signal characteristic information.

The stored emotional expression information and emotional stimulus source information may be displayed on a user's device.

The above described embodiment of the application provides a method of monitoring emotions, which, by acquiring emotional expression information of a user's current emotion and emotional stimulus source information of the current emotion and correlating the emotional expression information with the emotional stimulus source information and storing the correlated emotional expression information and emotional stimulus source information, can record the stimulus source information of the emotional expression while recording the user's emotional expression, so as to expand the scope of monitoring emotions and ensure the traceability of the emotional expression.

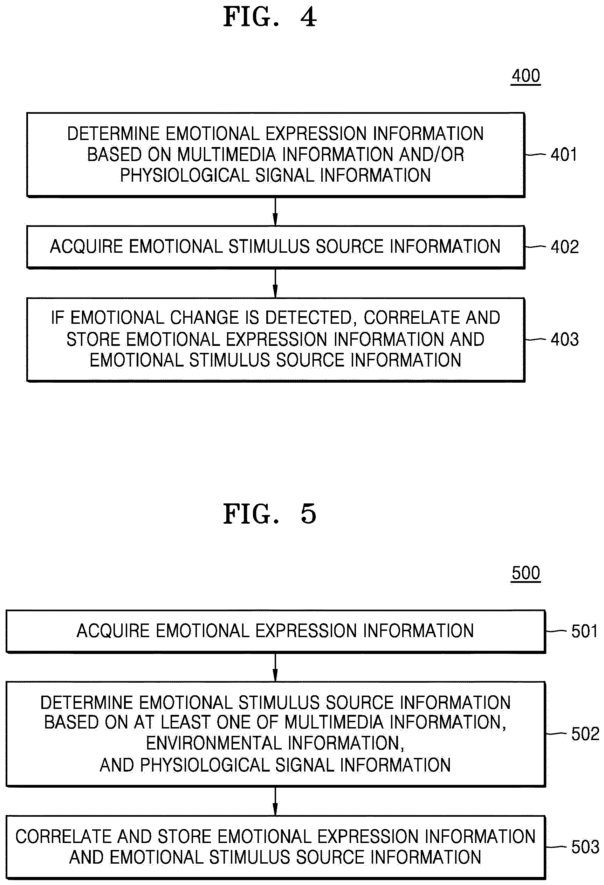

FIG. 4 shows a flowchart 400 illustrating a method of monitoring emotions according to another embodiment. The flowchart 400 comprises the following steps.

In step 401, the emotional expression information of a current emotion of a user is determined according to currently collected multimedia information and/or physiological signal information, wherein the multimedia information comprises at least one of text information, image information, audio information and video information.

In the present embodiment, the terminal can use a multimedia sensor to collect the multimedia information, and/or use a physiological signal sensor to collect physiological signal information of the user. When collecting the multimedia information, the terminal can use an image sensor to collect image information, use an audio sensor to collect audio information, use the above two sensors to collect video information, or use text acquiring technology to acquire a text message input by a user such as a short message edited by a user, a text explanation attached to a photograph and so on. In the step of collecting physiological signal information, the collected physiological signal information comprises, but is not limited to, heart rate, electrocardiogram, skin conductance, body temperature and blood pressure. Then the terminal can perform data analysis on at least one of the collected text information, image information, audio information, video information and physiological signal information to determine the emotional expression information of the user's current emotion. For example, if a textual description characterizing an emotion such as sad or happy is acquired from currently collected text information, the text information can be the emotional expression information; if a smiling face of the user is extracted from currently collected image information, the image information can be the emotional expression information; if a crying voice of the user is extracted from currently collected audio information, the audio information can be the emotional expression information; if a signal characterizing high blood pressure is extracted from currently collected physiological signal information, the physiological signal information can be the emotional expression information; if a painful expression and/or painful groan of the user is extracted from currently collected video information, the video information can be the emotional expression information; if more than one emotional expression information with different file formats are collected simultaneously, the more than one emotional expression information are considered as the emotional expression information.

In step 402, emotional stimulus source information of the current emotion is acquired.

In the present embodiment, the emotional stimulus source information may be information about causes which lead to the current emotion of the user. The causes may be a person, an object, an event, a sentence, an action and so on. When acquiring the emotional stimulus source information of the current emotion, all information currently acquired by the terminal can be analyzed and the emotional stimulus source information can be extracted.

In step 403, the emotional expression information is correlated with the emotional stimulus source information and the correlated emotional expression information and emotional stimulus source information is stored when a change of the current emotion is detected.

In the present embodiment, an emotional state of the user can be collected continuously at a certain sampling frequency by the emotional expression information acquired in step 401. When a change of the user's emotion is detected, the emotional expression information and the emotional stimulus source information acquired in step 402 are correlated and stored. That is, the terminal can collect emotional expression information continuously and determine the current emotion of the user by the emotional expression information. Further, the terminal does not need to store the collected emotional expression information and the collected emotional stimulus source information when the user's emotion remains in a stable state. Only when the current emotion changes significantly, does the terminal need to correlate the emotional expression information with the emotion stimulus source information and store the correlated emotional expression information and emotional stimulus source information.

In an alternative implementation of the present embodiment, the change of the current emotion comprises a change of an emotional type or a change of an emotional intensity regarding the current emotion. The emotional type may refer to the classification of emotions according to human's feeling cognition, and in particular, comprises calmness, joy, sadness, surprise, anger, and fear; the change of the emotional intensity can represent a saturation degree of a certain type emotion in regard to expressing respective feelings. Since the emotion may comprise two properties, i.e. an emotional type and an emotional intensity, the change of the current emotion may also comprise changes of the two properties, one is the change of the emotion type such as a change from being calm to being joyful, the another is the change of the emotional intensity such as a change from being a little joyful to being very joyful. Specifically, the emotional type and the emotional intensity can be obtained according to the emotional expression information because different emotional types and emotional intensities correspond to different emotional characteristic parameters which may comprise expression parameters and speech parameters (for example, a facial characteristic "a rise in an angle of the mouth " corresponds to the emotion type "joy", and the larger an amplitude of the rise, the higher the emotion intensity is). The emotional characteristic parameters can be extracted from the collected emotional expression information of the current emotion, and the emotional type and the emotional intensity of the current emotion can further be determined according to the emotional characteristic parameters.

In an alternative implementation of the present embodiment, the emotional intensity change is embodied in that an amplitude of the emotional intensity change reaches a preset threshold. In the present embodiment, different intensity values which are in direct proportion to the saturation degree of the emotion may be allocated to different emotional intensities when the emotional intensities are evaluated. Therefore, a change of the emotional intensity may refer to a change of the emotional intensity value and the amplitude of the change of the emotional intensity value reaches a preset threshold. In other words, for a same emotional type, the emotional expression information and the emotional stimulus source information can be stored only if the amount of the emotional intensity change reaches a certain degree. Otherwise, the relevant emotional information does not need be stored.

In an alternative implementation of the present embodiment, a conversion can be performed on the collected emotional expression information, and the conversed emotional expression information and emotional stimulus source information can be correlated and stored. Specifically, the terminal can perform informationionazing extraction on directly collected emotional expression information, so that information elements which can represent characteristics of the current emotion are obtained and an expressing form conversion can be further performed on the information elements to realize information conversion of the emotional expression information. For example, a smiling face of a user is extracted from a group photograph as an information element representing the user's emotional characteristics by facial feature recognition technology, and an expressing form conversion is performed on the smiling face, that is to say, the real smiling face can be converted into an animated smiling face, audio information containing laughter, or textual information containing a word "happy". Then the converted emotional expression information and emotion stimulus source information is correlated and stored. As such, when the emotional expression information needs to be stored, all emotional expression information can be converted into information of a same type firstly and the information of the same type is stored for the sake of later information management. Alternatively, the collected audio information can be converted into text message and stored, reducing a required space for storing the information.

In an alternative implementation of the present embodiment, the emotional expression information comprises at least one of text information, image information, audio information, video information and physiological signal information.

Compared to the embodiment shown in FIG. 2, the method of monitoring emotions of the embodiment shown in FIG. 4 describes an exemplary implementation illustrating how to acquire emotional expression information and when the emotional expression information and the emotion stimulus source information are stored. Specifically, the emotional expression information of a current emotion of a user is determined firstly according to at least one of the currently collected image information, audio information, video information and physiological signal information, then emotional stimulus source information of the current emotion is acquired, and then the emotional expression information and the emotional stimulus source information are correlated and stored when a change of the current emotion is detected. The present embodiment further determines a trigger for correlating the emotional expression information with the emotional stimulus source information and storing the correlated emotional expression information and emotional stimulus source information, enabling the stored emotion related information to effectively characterize the state of the emotional change, and improving the efficiency of monitoring emotions.

With further reference to FIG. 5, it shows a flowchart 500 illustrating a method of monitoring emotions, according to another embodiment of the application. The method of monitoring emotions comprises the following steps.

In step 501, emotional expression information of a current emotion of a user is acquired.

In step 502, emotional stimulus source information of the current emotion is determined according to at least one of currently acquired multimedia information, environmental information and physiological signal information.

In the present embodiment, the emotional stimulus source information of the current emotion is determined according to at least one of currently acquired multimedia information, environmental information and physiological signal information, when emotional stimulus source information of the current emotion is acquired. Specifically, the terminal can acquire at least one of the multimedia information, the environmental information and the physiological signal information by various signal sensors, perform a data analysis on at least one of the collected information, and determine emotional stimulus source information of the current emotion according to a result of the data analysis.

In an alternative implementation of the present embodiment, the determining the emotional stimulus source information according to the currently acquired multimedia information comprises determining the emotional expression information according to currently output and/or collected multimedia information, wherein the multimedia information comprises at least one of text information, image information, audio information and video information. In the present embodiment, the multimedia information output and/or collected by the terminal is acquired. Then a data analysis is performed on the multimedia information and the emotional stimulus source information which causes the emotional change can be determined according to the result of the data analysis.

In an alternative implementation of the present embodiment, the determining the emotional stimulus source information according to the currently acquired multimedia information comprises selecting at least one of currently output and/or collected audio information, attribute information derived from the audio information, an audio segment in a preset time period of the audio information and semantic information derived from the audio information as the emotional stimulus source information.

In the present embodiment, the audio information currently output and/or collected by the terminal is acquired firstly. Then a data analysis is performed on the audio information to obtain attribute information derived from the video information, a video segment in a preset time period of the video information, semantic information derived from the video information, event information derived from the video information, personal information derived from the video information, screenshot information derived from the video information, and audio information derived from the video information. After that, at least one of the audio information, the attribute information derived from the audio information, the audio segment in a preset time period of the audio information and the semantic information derived from the audio information is selected as the emotional stimulus source information, wherein the preset time period may be a period before and/or after the current time point. In one example, when the terminal outputs (namely, plays) a song, the currently playing song can be acquired by detecting the operational state of the terminal, so as to achieve at least one of the following three items: a) attribute information such as the name of the song, the singer/performer and the album can be obtained by performing a data analysis on the song; b) semantic information such as lyrics of the song and the main idea of the lyrics obtained by semantic analysis can be obtained; and c) an audio segment within a preset time period can be obtained by splitting the song. In another example, when a user uses the terminal to make a voice calling, the terminal can actively collect the audio of the calling and perform a data analysis on the audio, so as to achieve at least one of the following three items: a) the attribute information such as the contact person, the calling duration and the calling frequency between the caller and the contact person can be obtained; b) semantic information can be obtained by semantic analysis on the calling contents; c) an audio segment within a preset time period can be obtained by splitting the calling audio. A stimulus source analysis is performed on the information related to the audio obtained in the above two examples to determine the stimulus source information.

In an alternative embodiment of the present implementation, the determining the emotional stimulus source information according to the currently output and/or collected multimedia information comprises selecting at least one of currently output and/or collected video information, attribute information derived from the video information, a video segment in a preset time period of the video information, semantic information derived from the video information, event information derived from the video information, personal information derived from the video information, screenshot information derived from the video information, and audio information derived from the video information as the emotional stimulus source information.

In the present embodiment, the video information currently output and/or collected by the terminal is firstly acquired. Then a data analysis is performed on the video information to obtain the attribute information, semantic information, the event information, the personal information and the video segment within a preset time of the video information. After that, at least one piece of emotional stimulus source information is determined from the above information by a stimulus source analysis, wherein the preset time period may be a period before and/or after the current time point. In one example, when the terminal outputs (namely, plays) a movie, the currently playing movie can be acquired by detecting the operational state of the terminal, so as to achieve at least one of the following four items: a) attribute information such as the name of the movie, the main actors, the director, the production company can be obtained by performing a data analysis on the movie; b) semantic information such as lines of the movie and the summary of the lines obtained by semantic analysis can be obtained; and c) a screenshot can be performed on the movie and the screenshot is analyzed to obtain the event information and the personal information; and d) a video segment within a preset time period can be obtained by splitting the movie. In another example, when a user uses the terminal to make a video calling, the terminal can actively collect the video of the calling and perform a data analysis on the video, so as to achieve at least one of the following four items: a) the attribute information such as the contact person, the calling duration and the calling frequency between the caller and the contact person can be obtained; b) semantic information can be obtained by semantic analysis on the video calling contents; c) a screenshot can be performed on the video and the screenshot is analyzed to obtain the event information or the personal information; and d) a video segment within a preset time period can be obtained by splitting the calling video. A stimulus source analysis is performed on the information related to the video obtained in the above two examples to determine the stimulus source information.

In an alternative implementation of the present embodiment, the determining the emotional stimulus source information according to the currently output and/or collected multimedia information comprises selecting at least one of currently output and/or collected image information, event information derived from the image information and personal information derived from the image information as the emotional stimulus source information.

In the present embodiment, the image information currently output and/or collected by the terminal is firstly acquired. Then a data analysis is performed on the image information to obtain event information and personal information included in the image information. After that, at least one of the emotional stimulus source information is determined from the above information by a stimulus source analysis. In one example, when the terminal outputs (namely, displays) or collects, by a camera, a picture, the currently browsing picture can be acquired by detecting the operational state of the terminal, so as to obtain the event information or the personal information by performing an analysis on the picture. Specifically, the personal information such as the person's name, gender and age can be determined through the person's facial characteristic and dressing. In another example, the event information included in the picture is determined by performing an analysis on the body movement or facial expression of the person in the picture, picture background, etc. A stimulus source analysis is performed on the information related to the picture obtained in the above two examples to determine the stimulus source information.

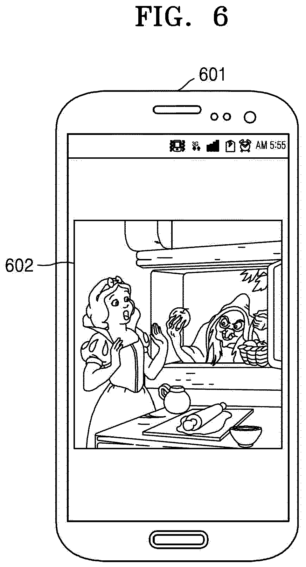

FIG. 6 is a schematic diagram of an application scene of the present embodiment. As shown in FIG. 6, when a user uses the terminal 601 to browse a picture 602, the terminal can obtain the picture 602 if the terminal detects that the emotion of the user becomes fearful suddenly and perform an analysis on the picture 602 through an image analysis technique. As for performing the analysis on the picture 202, firstly, personal information, i.e. Snow White (the first personal information) and old witch (the second personal information) in the picture 602 is identified according to person's facial characteristics and clothes; secondly, first event information of the image (i.e. the old witch was giving an apple to Snow White) can be determined by analyzing the person's actions. Based on the existing knowledge, it can be realized that the queen disguised herself as the old witch in the picture and the apple is poisonous, so that second event information (i.e. the queen wanted to give the poisonous apple to Snow White) can be obtained. Finally, by comprehensive analysis of the two pieces of personal information and the two pieces of event information, it can be determined that the emotional stimulus source information for causing the user fear is that the queen wanted to give the poisonous apple to Snow White.

In an alternative implementation of the present embodiment, the determining the emotional stimulus source information according to the currently output and/or collected multimedia information comprises selecting at least one of currently output and/or collected text information and semantic information derived from the text information as the emotional stimulus source information.

In the present embodiment, the text information currently output and/or collected by the terminal is acquired firstly. Then a data analysis is performed on the image information to obtain semantic information derived from the text information. After that, at least one of the text information and the semantic information is determined as the emotional stimulus source information. For example, when the terminal outputs (namely, displays) text information, the currently browsing text image can be acquired by detecting the operational state of the terminal, so as to obtain the text information included in the text image by character recognition technique. As an another example, when the user inputs words by the terminal, the input words can be collected directly to be used as the collected text information. After acquiring the text information, a semantic analysis can be performed on the acquired text information to obtain semantic information. Then a stimulus source analysis can be performed on the obtained text information and/or semantic information to determine the emotional stimulus source information. In an application scene of the present embodiment, if the text message input by the user and collected by the terminal is "A lonely stranger in a strange land I am cast, I miss my family all the more on every festive day", this text message can be used directly as the emotional stimulus source information which cause user to feel sad. Alternatively, a semantic analysis can be performed on the text information to obtain semantic information "being far away from my hometown, I can't reunite with families", and the semantic information can be used as emotional stimulus source information.

In an alternative implementation of the present embodiment, the physiological signal information comprises user's current physiological signal information or health information which is obtained according to the physiological signal information, wherein the health information can be obtained by analyzing the physiological signal information and can reflect the health status of the user. For example, when the user's collected body temperature signal is 38°C, the temperature signal can be analyzed to find the temperature signal is higher than the normal human body temperature of 36°C, therefore it can be deduced that the user is having a fever, and the health information can be an image or a text representing the "fever".

It should be pointed out that if the physiological signal information is used as emotional stimulus source information, the acquired emotional expression information will no longer comprise the physiological signal information. Instead, the acquired image information (e.g. a photograph of facial redness caused by a fever) will be used as the emotional expression information, for example.

In an alternative implementation of the present embodiment, the environmental information comprises at least one of time information, location information, weather information, temperature information and humidity information. In the present embodiment, the environmental information can be used as emotional stimulus source information. The environmental information may be the information relating to current environment which can be acquired while collecting the emotional expression information, wherein the information relating to current environment may comprise time information, geographic information, and climatic information such as current weather, temperature and humidity which are correlated with the acquired emotional expression information. The environmental information may be characterized by text information, image information, audio information and video information. For example, a photograph depicting blue sky may be used as the emotional stimulus source information because the photograph contains weather information "sunny".

It should be pointed out that, two or three pieces of the above-mentioned multimedia information, environmental information, and physiological information can be used as the emotional stimulus source information when the two or three information can cause the emotion to change. Alternatively, the user can choose one of the above mentioned information to be emotional stimulus source information. For example, the terminal determines that the current emotion of the user is sadness according to the currently collected emotional expression information, determines what is currently played is a movie named as "Butterfly Lovers" by detecting the operation state of the terminal, determines that the current weather information is light rain from a weather forecast website via the internet, and determines that the user's current temperature is higher than a normal temperature according to the temperature signal obtained by a physiological signal sensor. All of the three pieces of information can be used as the emotional stimulus source information which causes the user to feel sad. Alternatively, the user can receive all of the three pieces of information and choose one or more as the emotional stimulus source information. For example, the user will not choose the weather information indicating light rain as emotional stimulus source information leading to the sadness if the user likes a rainy day.

The multimedia information, environmental information and physiological signal information can be listed simply or as emotion stimulus source information when two or more of the information are chosen as emotional stimulus source information. Alternatively, the information can be analyzed logically and an analysis result can be used as emotional stimulus source information. For example, if the acquired time information is a user's birthday and video information indicating the user celebrates his birthday with his friends is collected, the related text or voice regarding "my friends celebrate my birthday" can be used as the emotional stimulus source information according to the logical analysis of the time information and video information.

In step 503, the emotional expression information and the emotional stimulus source information are correlated and stored.

In an alternative implementation of the present embodiment, emotional expression type and emotional intensity are correlated with the emotional stimulus source information and the correlated emotional expression type, emotional intensity and the emotional stimulus source information are stored. In the present embodiment, the emotional type and the emotional intensity acquired by the emotional expression information can be correlated with the emotional stimulus source information and stored when the emotional expression information is to be stored. As such, the user can acquire specific emotion type and emotional intensity or classify all of the collected emotions according the emotional types.

In an alternative implementation of the present embodiment, the emotional intensity can be normalized. Specifically, different users express their own emotions in different ways. For example, an outgoing person is willing to show his emotions. He will laugh when he feels happy and cry when he feels sad. In contrast, an introverted person is more restrained. He will only smile when he feel happy and weep when he feel sad. Therefore, the emotional intensity may be normalized so as to describe every user's emotional change in a more accurate way. Specifically, as for the emotions with a same emotion type, the strongest emotional intensity expressed by the user is set as the maximum value MAX, the calmest emotional intensity expressed by the user is set as the minimum value MIN, and other emotional levels X can be normalized based on MAX and MIN. For example, a normalized emotional intensity X' can be calculated according to a formula X' = (X - MIN) / (MAX - MIN). In this way, it is ensured that each user's emotional intensity can fall into the range from 0 to 1 by the normalization, so as to ensure that the effect to depict different user's emotional intensities is same.

In an alternative implementation of the present embodiment, when the emotional type of the current emotion remains unchanged in a preset sampling time period, the stored emotional expression information and the stored emotional stimulus source information are replaced with emotional expression information of the current emotion and emotional stimulus source information of the current emotion, respectively, if the emotional intensity of the current emotion is greater than the stored emotional intensity. Specifically, after correlating the emotional expression information with the emotional stimulus source information and storing the correlated information and if the emotion type of the current emotion remains unchanged in a preset sampling period (for example, 10 minutes) and the emotional intensity is fluctuating in a range, only emotional expression information corresponding to the maximum emotional intensity and related emotional stimulus source information are stored, so as to reduce the required storage space as well as fully reflect user's emotion state.

In an application scene of the present embodiment, when a user's emotional type changes form calm to happiness, the emotional expression information and emotional stimulus source information which are obtained at the time when the change occurs are correlated and stored and the emotional intensity with a value of 60% at this time can be stored. If, in one case, the user's emotional type maintains happy in the next 10 minutes and the value of emotional intensity is changing, for example, the value of emotional intensity at the seventh minute changed to 70%, the previously stored information is replaced with the emotional expression information and emotional stimulus source information acquired at the seventh minute; If, in another case, the value of emotional intensity at the seventh minute increased to 95% (i.e. the amplitude of the change is 35% which is larger than a preset amplitude threshold, for example, 30%), the emotional expression information and emotional stimulus source information acquired at the seventh minute are correlated and stored, on the other hand, the previously stored information is still preserved.

In an alternative implementation of the present embodiment, the stored emotional expression information and the correlated emotional stimulus source information are shared and displayed. In the present embodiment, a user can share the stored emotional expression information and the correlated emotional stimulus source information in a wired or wireless manner, for example, the user can publish the information on a social platform or send the information to a certain contact person. Alternatively, the user can display the information on the user's terminal. Further, the user, by a registered user's identity (ID), can log in a system in which the information is stored through various terminals of different platforms and browse the stored emotional expression information and emotional stimulus source information. The user can bind the user's biological information and the user's ID when registering the user's ID, so that the terminal can automatically identify the current user and log in the relevant system.

In an alternative implementation of the present embodiment, a data analysis is performed on the stored emotional expression information and the correlated emotional stimulus source information and an analysis result is shared or displayed. In the present embodiment, a data analysis can be performed on the stored emotional expression information and the correlated emotional stimulus source information, mainly focusing on the fluctuation of the emotion and causes which lead to the fluctuation. Specifically, the related information such as the stored emotional expression information can be analyzed based on the emotional type, stimulus source (time, place, person), and the analysis result is displayed or shared in the form of a text, a chart, slides or a piece of audio. For example, a graph showing emotional changes over a time period can be depicted. Alternatively, the stored emotional expression information and the correlated emotional stimulus source information can be formed to be a slide file. After that, the graph or the slide file can be shared or displayed.

In an alternative implementation of the present embodiment, a data analysis is performed on the emotional expression information and the correlated emotional stimulus source information and emotional managing recommendation information is output according to a result of the data analysis. In the present embodiment, after analyzing the stored emotional expression information and the correlated emotional stimulus source information, emotional managing recommendation information can be input according to the result of the data analysis. For example, if it is found, by a data analysis, that the user's emotion is angry in a time period and the causes which lead to the anger are trifles, the emotional managing recommendation information can remind the user of adjusting his mood, controlling the emotion which is prone to be angry and providing some tips for helping the user to be in a good mood.

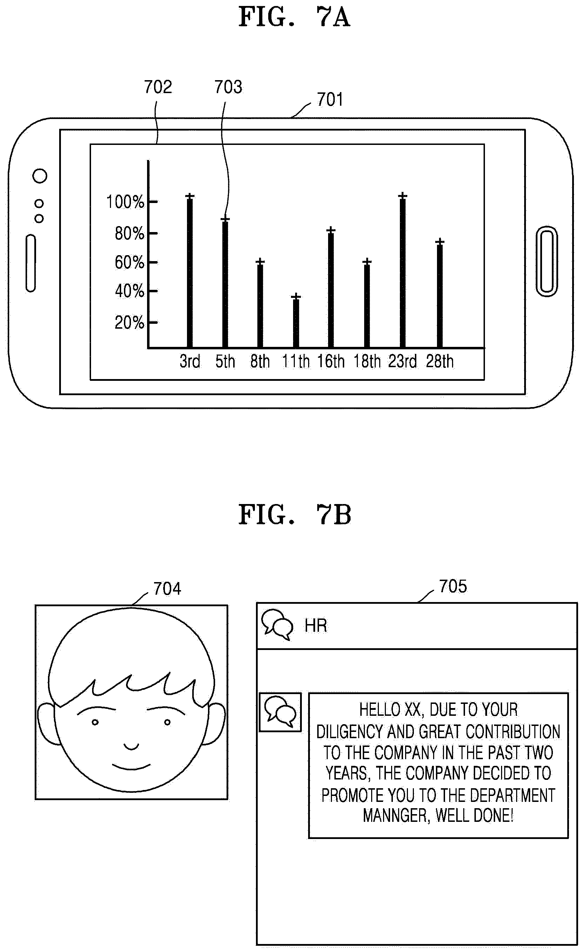

FIG. 7A is a schematic diagram of another application scene of the present embodiment. As shown in FIG. 7A, a diagram 702 is shown on the terminal 701, in which a histogram illustrates degree changes of the user's joy, each of the columns of the histogram represents a record regarding joy and the height of the column represents an intensity degree of the user's joy. If a user wants to further know the specific condition of a certain joyful emotion, the user may click on the star pattern 703 at the top of the histogram. As shown in FIG.7B, the terminal will show specific information regarding this joyful emotion, including the emotional expression information of the user's joyful emotion, i.e. the user's smile face 704, and the emotional stimulus source information which leads to the user's joyful emotion, i.e. SMS 705. From FIG. 7B, the user can not only see his joyful feeling at that time, but also recall the reason why he was joyful is that he received a message informing him of getting a promotion.

In the present embodiment, step 501 and step 503 in the above flowchart are the same as the step 201 and step 203 in the aforementioned embodiment, respectively, and will not be described in detail.

It can be seen from FIG. 5 that, compared to the embodiment shown in FIG. 2, the method of monitoring emotions in the present embodiment shows an exemplary implementation of acquiring emotional stimulus source information in more detail. Specifically, emotional expression information of a user's current emotion is acquired firstly. Then emotional stimulus source information of the current emotion is determined according to at least one of the currently collected multimedia information, environmental information and physiological signal information. After that, the emotional expression information and the emotional stimulus source information are correlated and stored. In the present embodiment, the emotional stimulus source information is determined according to the acquired multimedia information, environmental information and physiological signal information, and the emotional stimulus source information obtained in such a way comprises almost all stimulus source information which possibly leads to emotional changes. Therefore, the stimulus sources thus obtained are more comprehensive, so that the accuracy of monitoring an emotion is further improved.

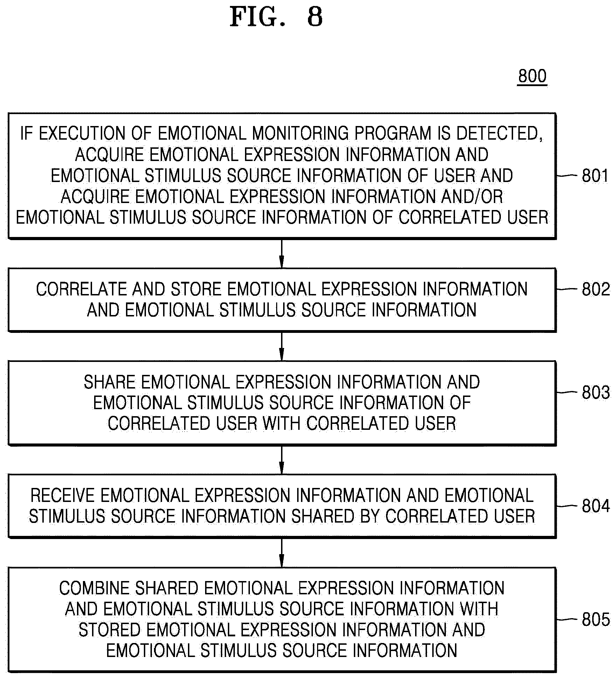

FIG. 8 shows a flowchart 800 illustrating a method of monitoring an emotion, according to another embodiment. The method of monitoring emotions comprises the following steps.

In step 801, emotional expression information and emotional stimulus source information of a user are acquired and emotional expression information and/or emotional stimulus source information of a correlated user are/is acquired when it is detected that a preset emotion monitoring program is executed.

In the present embodiment, the emotion monitoring program may be a program designed for monitoring emotions or a common program, such as a short message program, implemented in a terminal which can enable the terminal to collect emotion related information when the common program is set to be executed. Therefore, the terminal can actively acquire the emotional expression information of the user's current emotion and the correlated user's emotional expression information and/or emotional stimulus source information when a preset emotion monitoring program is executed.

It should be pointed out that, before acquiring the correlated user's emotional expression information and/or emotional stimulus source information, biological information of the correlated user can be recorded so as to identify the correlated user's emotional expression information and/or emotional stimulus source information from various information currently collected according to the biological information.

In an application scene of the present embodiment, if a selfie taken by a user A contains the user A's smile face and a user B's slipping and fearful feeling in the background and if the user A has set the user B as his correlated user, the terminal can not only obtain the user A's emotional expression information, i.e. smiling face, but also obtain the user B's emotional expression information, i.e. fearful feeling and user B's emotional stimulus source information, i.e. slipping.

In the present embodiment, similarly to the above acquiring the emotional expression information of the current emotion, the terminal is enabled to collect the emotional stimulus source information and acquire correlated user's emotional expression information and/or emotional stimulus source information, a user's emotional expression information and emotional stimulus source information are acquired and a correlated user's emotional expression information and/or emotional stimulus source information are/is acquired when it is detected that the emotion monitoring program is executed. In this embodiment, the correlated the user B's smiling face may be the user A's emotional stimulus source information and this smiling face is the correlated user B's emotional expression information.

In step 802, the emotional expression information and the emotional stimulus source information of the current emotion are correlated and stored.

In step 803, the emotional expression information and/or emotional stimulus source information of the correlated user are shared with the correlated user.

In the present embodiment, once the terminal obtained the correlated user's emotional expression information in step 801, the terminal can record the information and share the information with the correlated user in a wired or wireless way. Before sharing, the terminal can also output a prompting message so as to allow the current user to choose whether or not to share the emotional expression information with the correlated user.

In an alternative implementation of the present embodiment, when the emotional stimulus source information corresponding to the correlated user's emotional expression information is acquired, the correlated user's emotional expression information and the corresponding emotional stimulus source information will be shared with the correlated user. In the present embodiment, when the correlated user's emotional expression information is acquired, the emotional stimulus source information corresponding to the emotional expression information might not be acquired accurately. Under such a circumstance, only the emotional expression information will be shared. Otherwise, the emotional expression information together with the corresponding emotional stimulus source information will be shared.

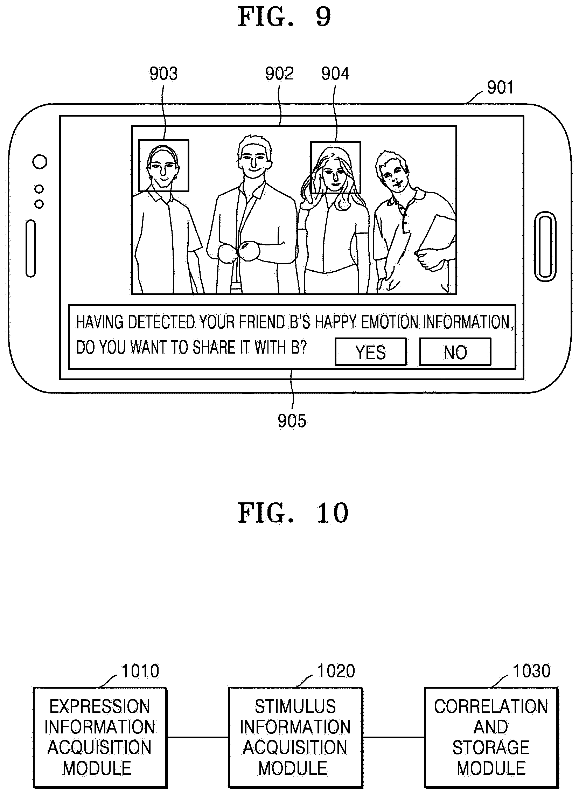

FIG. 9 is a schematic diagram of an application scene of the present embodiment. As shown in FIG. 9, the terminal 901 displays a group-photograph 902 which is just taken. By facial recognition technology, it can be judged that there are not only the current user A's smiling face 903, but also the user A's friend, that is, a correlated user B's smiling face 904. As such, the terminal 901 can output a prompting message 905, prompting the user A to determine whether or not to share the photograph with the user B.

In step 804, the emotional expression information and the emotional stimulus source information of the correlated user are received.

In the present embodiment, the terminal can also receive the emotional expression information and the emotional stimulation source information which are related to the current user and shared with the correlated user. Before receiving, the terminal can also output a prompting message prompting the current user to choose whether or not to receive the emotional expression information and the emotional stimulation source information.

In step 805, the emotional expression information and emotional stimulus source information of the correlated user are combined with the stored emotional expression information and emotional stimulus source information.

In the present embodiment, after receiving the emotional expression information and the emotional stimulus source information which are shared by the correlated user, the terminal can combine the received information with the stored information according to the time sequence and/or location information of generating the respective information.

In one application scene of the present embodiment, the terminal collects the current user A's laughter and the melody of song X by an acoustic sensor and the correlated user B's dancing action and smiling face by an image sensor. It can be determined, by data analysis of the collected audio information and image information, that the user A's emotional expression information is laughter and his emotional stimulus source information is the user B's dancing action, and that the user B's emotional expression information is smiling face and his emotional stimulus source information is the melody of the song X. As can be seen, the emotional expression information and the emotional stimulus information of the current user and the correlated user might be mixed together. In practice, different emotion related information may be differentiated according to different application scenes.

When the user B receives the emotional expression information and the emotional stimulus source information which are shared by the correlated user A and related to the user B himself, the received information can be combined with the information stored in the terminal.

In one possible implementation, the time when the received emotion related information is generated can be acquired and the received emotion related information is stored as information relating to the corresponding time. For example, a user B's emotional expression information which has been stored in a day comprises the emotional expression information X generated at 9 o'clock and the emotional expression information Y generated at 11 o'clock. If the user B receives emotional expression information Z which is generated at 10 o'clock and shared by the correlated user A, the information Z can be stored as the user B's emotional expression information. Further, if the user B receives another emotional expression information M which is generated at 9 o'clock, both the received information M and the previously stored information X are used as the emotional expression information generated at 9 o'clock; alternatively, a common emotional expression characteristic of the information M and the information X can be extracted to be formed as the emotional expression information of 9 o'clock.

In another possible implementation, location information indicating where the received emotion related information is generated can be acquired and the emotion related information is combined with other stored information which is generated at the same location. For example, the user B's stored emotional stimulus source information is emotional stimulus source information N which is generated at a location 1. If the user B receives emotional stimulus source information P which is generated at a location 2 and shared by the correlated user A, the information P can be stored as the user B's emotional stimulus source information. Further, if the user B receives another emotional expression information Q which is generated at the location 1, both the received information Q and the previously stored information N are used as the emotional expression information generated at the location 1.

In another possible implementation, the time information and the position information regarding when and where the received emotion related information is generated, respectively, can be acquired simultaneously and the emotion related information generated at the same location is combined in accordance with the time links.

Compared to the embodiment shown in FIG. 2, the method of monitoring emotions of the present embodiment describes an exemplary implementation of acquiring the correlated user's emotional expression information and emotional stimulus source information in more detail. Specifically, the terminal can collect the correlated user's emotion related information while collecting the current user's emotion related information and share the same with the correlated user. In addition, the terminal can receive emotion related information sent from the correlated user. The present embodiment broadens the source from which the emotion related information can be obtained so as to further improve the scope of monitoring emotions.

FIG. 10 shows a configuration diagram illustrating an apparatus for monitoring emotions according to an embodiment. As shown in FIG. 10, the apparatus for monitoring emotions of the present embodiment comprises: an expression information acquisition module 1010, a stimulus information acquisition module 1020 and a correlation and storage module 1030.

The expression information acquisition module 1010 is configured to acquire emotional expression information of a current emotion of a user;

The stimulus information acquisition module 1020 is configured to acquire emotional stimulus source information of the current emotion;

The correlation and storage module 1030 is configured to correlate the emotional expression information acquired by the expression information acquisition module 1010 with the emotional stimulus source information acquired by the stimulus information acquisition module 1020 and store the correlated emotional expression information and emotional stimulus source information.

The above mentioned embodiment of the application provides an apparatus for monitoring emotions, wherein the emotional expression information of a current emotion of a user is acquired by the expression information acquisition module, the emotional stimulus source information of the current emotion is acquired by the stimulus information acquisition module, and the emotional expression information and the emotional stimulus source information are correlated and stored by the correlation and storage module. The apparatus can record both emotional expression of a user and stimulus source information which leads to the emotional expression, so as to expand the scope of monitoring emotions and ensure the traceability of the emotional expression.

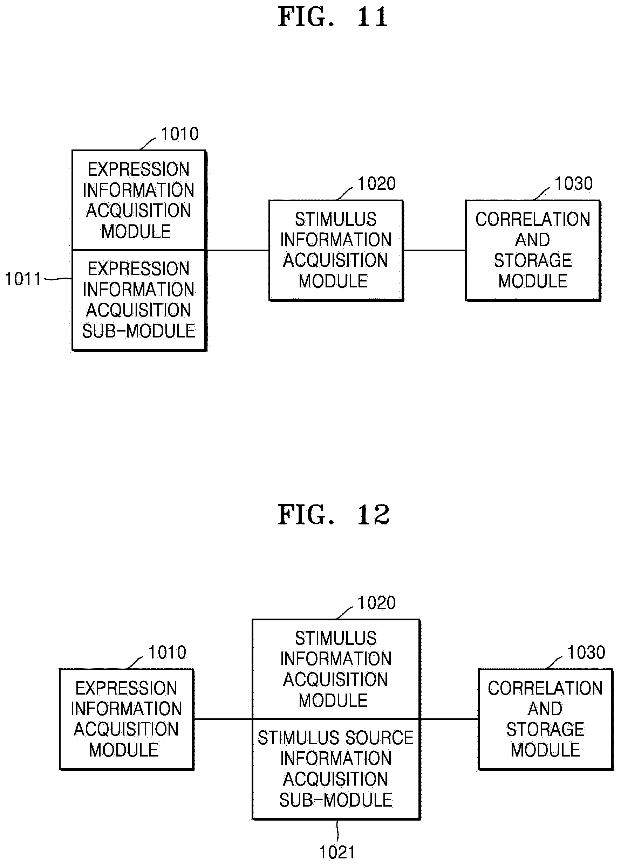

In an alternative implementation of the present embodiment, as shown in FIG. 11, the expression information acquisition module 1010 further comprises an expression information acquisition sub-module 1011 for determining the emotional expression information of a user's current emotion according to currently collected multimedia information and/or physiological signal information, wherein the multimedia information comprises at least one of text information, image information, audio information and video information.

In an alternative implementation of the present embodiment, the above apparatus for monitoring emotions further comprises a change detecting module, not shown in drawings, for detecting a change of the current emotion. When detecting that a change of the current emotion occurs, the correlation and storage module 1030 correlates the emotional expression information with the emotional stimulus source information and stores the correlated emotional expression information and emotional stimulus source information.

In an alternative implementation of the present embodiment, the change of the current emotion comprises an emotional type change or an emotional intensity change of the current emotion.

In an alternative implementation of the present embodiment, the emotional intensity change comprises amplitude of the emotional intensity change reaching a preset threshold.

In an alternative implementation of the present embodiment, the above apparatus for monitoring emotions further comprises an expression information conversing module, not shown in drawings, for performing an information conversion of the emotional expression information.

The above correlation and storage module 1030 comprises a correlation and storage sub-module for correlating the converted emotional expression information with the emotional stimulus source information and storing the correlated emotional expression information and emotional stimulus source information.

In an alternative implementation of the present embodiment, the emotional expression information comprises at least one of text information, image information, audio information, video information and physiological signal information.

Compared to the embodiment shown in FIG. 10, the apparatus for monitoring emotions of the present embodiment shown in FIG. 11 further determines a trigger for correlating the emotional expression information with the emotional stimulus source information and storing the correlated emotional expression information and emotional stimulus source information, enabling the stored emotion related information to effectively characterize the state of the emotional change, and improving the efficiency of monitoring emotions.

In an alternative implementation of the present embodiment, as shown in FIG.12, the above stimulus source information acquisition module 1020 comprises a stimulus source information acquisition sub-module 1021 for determining the emotional stimulus source information of the current emotion according to at least one of currently acquired multimedia information, environmental information and physiological signal information.

In an alternative implementation of the present embodiment, the stimulus source information acquisition sub-module 1021 is configured to determine the emotional stimulus source information according to currently output and/or collected multimedia information, wherein the multimedia information comprises at least one of text information, image information, audio information and video information.

In an alternative implementation of the present embodiment, the stimulus source information acquisition sub-module 1021 comprises an audio information unit, not shown in drawings, for selecting at least one of currently output and/or collected audio information, attribute information derived from the audio information, an audio segment in a preset time period of the audio information and semantic information derived from the audio information as the emotional stimulus source information.

In an alternative implementation of the present embodiment, the stimulus source information acquisition sub-module 1021 comprises a video information unit, not shown in drawings, for selecting at least one of currently output and/or collected video information, attribute information derived from the video information, a video segment in a preset time period of the video information, semantic information derived from the video information, event information derived from the video information, personal information derived from the video information, screenshot information derived from the video information, and audio information derived from the video information as the emotional stimulus source information.

In an alternative implementation of the present embodiment, the stimulus source information acquisition sub-module 1021 comprises an image information unit, not shown in drawings, for selecting at least one of currently output and/or collected image information, event information derived from the image information and personal information derived from the image information as the emotional stimulus source information.

In an alternative implementation of the present embodiment, the stimulus source information acquisition sub-module 1021 comprises a text information unit, not shown in drawings, for selecting at least one of currently output and/or collected text information and semantic information derived from the text information as the emotional stimulus source information.

In an alternative embodiment of the present implementation, the physiological signal information comprises user's current physiological signal information or health information derived from the current physiological signal information.

In an alternative implementation of the present embodiment, the environmental information comprises at least one of time information, location information, weather information, temperature information and humidity information.

In an alternative implementation of the present embodiment, the above apparatus for monitoring emotions further comprises an emotional storage module, not shown in drawings, for correlating an emotional type and an emotional intensity of the current emotion with the emotional expression information and storing the correlated emotional type, emotional intensity and emotional stimulus source information.

In an alternative implementation of the present embodiment, the above apparatus for monitoring emotions further comprises a normalizing module for normalizing the emotional intensity.

In an alternative implementation of the present embodiment, if the emotional type of the current emotion remains unchanged in a preset sampling time period, the apparatus further comprises an emotion updating module, not shown in drawings, for replacing the stored emotional expression information and the stored emotional stimulus source information with emotional expression information of the current emotion and emotional stimulus source information of the current emotion, respectively, provided that the emotional intensity of the current emotion is greater than the stored emotional intensity.

In an alternative implementation of the present embodiment, the above apparatus for monitoring emotions further comprises a program detecting module, not shown in drawings, for detecting an execution of an emotional monitoring program.

In an alternative implementation of the present embodiment, the above apparatus for monitoring emotions further comprises a displaying and sharing module, not shown in drawings, for sharing or displaying the stored emotional expression information and the correlated emotional stimulus source information; a data-analyzing module, not shown in drawings, for performing data analysis on the stored emotional expression information and the correlated emotional stimulus source information and sharing or displaying a result of the data analysis; an emotional recommendation module, not shown in drawings, for performing data analysis on the stored emotional expression information and the correlated emotional stimulus source information and outputting an emotional managing recommendation information according to the result of the data analysis.

The apparatus for monitoring emotions of the present embodiment determines the emotional stimulus source information according to the acquired multimedia information, environmental information and physiological signal information, and the emotional stimulus source information obtained in such a way comprises almost all stimulus source information which possibly lead to emotional changes and the stimulus sources thus obtained are more comprehensive, so that the accuracy of monitoring emotions is further improved.

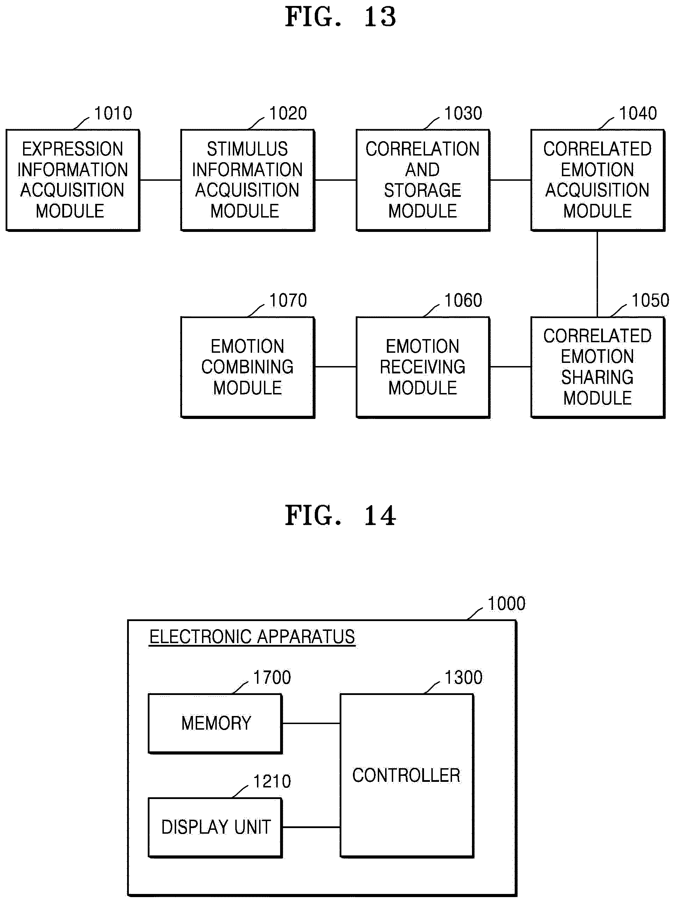

In an alternative implementation of the present embodiment, as shown in FIG. 13, the above apparatus for monitoring emotions further comprises a correlated emotion acquisition module 1040 for acquiring emotional expression information and/or emotional stimulus source information of a correlated user and a correlated emotion sharing module 1050 for sharing the emotional expression information and/or emotional stimulus source information of the correlated user.

In an alternative implementation of the present embodiment, the above apparatus for monitoring emotions further comprises an emotion receiving module 1060 for receiving the emotional expression information and the emotional stimulus source information shared by the correlated user and an emotion combining module 1070 for combining the emotional expression information and the emotional stimulus source information which are received by the emotion receiving module 1060 and shared by the correlated user with the stored emotional expression information and the stored emotional stimulus source information.

The apparatus for monitoring emotions of the present embodiment can acquire the collected correlated user's emotion related information from the current user's emotion related information and share the same with the correlated user. In addition, the apparatus can receive emotion related information sent from the correlated user. The present embodiment broadens the source from which the emotion related information can be obtained so as to further improve the scope of monitoring emotions.

The modules described in the above embodiments can be implemented in software or hardware or disposed in a processor. For example, it can be described that a processor comprises an expression information acquisition module, a stimulus source information acquisition module and a correlation and storage module. Under some circumstances, the name of each module does not limit the module itself. For example, the expression information acquisition module can also be described as "a module used to acquire the emotional expression information of the user's current emotion".

FIG. 14 is a block diagram illustrating a configuration of an electronic apparatus 1000 according to some embodiments. The electronic apparatus 1000 may be an implementation example of the apparatus for monitoring emotions described in the drawings above. The descriptions provided above can be wholly applied to the electronic apparatus 1000. The electronic apparatus 1000 may be one of various electronic apparatuses such as a smart phone, a smart TV, a tablet computer, a portable laptop computer, a desktop computer, a wearable device, and so on.

Referring to FIG. 14, the electronic apparatus 1000 includes a memory 1700, a display unit 1210, and a controller 1300.

The controller 1300 may generally control all operations of the electronic apparatus 1000 and may process various pieces of data necessary for an operation of the electronic apparatus 1000. Controlling of an operation of the apparatus for monitoring emotions described in the drawings or processing of data necessary for the operation may be wholly performed by the controller 1300. Thus, although not specifically mentioned, the descriptions provided above can be applied to the electronic apparatus 1000 of FIG. 14. The controller 1300 may include a CPU, a microprocessor, a GPU, etc. The controller 1300 may include the modules illustrated in the drawings above.

The controller 1300 may acquire emotional expression information indicating an emotion of a user. The controller 1300 may acquire emotional stimulus source information indicating a cause of the emotion. The controller 1300 may correlate the emotional expression information with the emotional stimulus source information and store the correlated emotional expression information and emotional stimulus source information in the memory 1700.

The controller 1300 may display the emotional expression information and emotional stimulus source information on the display unit 1210. The controller 1300 may correlate time information about a time when the emotional expression information and emotional stimulus source information are acquired with the emotional expression information and emotional stimulus source information and store the correlated time information, emotional expression information, and emotional stimulus source information in the memory 1700.

The controller 1300 may display content indicating an emotion of the user over time on the display unit 1210. The content may vary such as a text, a chart, a slide, a graph, etc. showing the emotion over time. An example of the content indicating the emotion of the user over time is described with reference to FIG. 7A above.

If a specific time is selected from the content according to a user input, the controller 1300 may display emotional expression information and emotional stimulus source information relating to the selected time on the display unit 1210. The electronic apparatus 1000 may further include a user input interface that receives the user input for selecting the specific time from the content.

As shown in FIG. 7A described above, if the user input for selecting the specific time from the content indicating the emotion of the user over time is received, as shown in FIG. 7B, a screen of the display unit 120 may be switched. That is, the controller 1300 may display the emotional expression information and the emotional stimulus source information relating to the selected time on the display unit 1210.

The controller 1300 may acquire the emotional stimulus source information based on at least one of multimedia information, environmental information and physiological signal information of the user. The multimedia information includes at least one of text information, image information, audio information, and video information.

The controller 1300 may acquire the emotional expression information based on at least one of the multimedia information and the physiological signal information.

After storing the emotional expression information and the emotional stimulus source information in the memory 1700, the controller 1300 may monitor an emotional type change and an emotional intensity change of the emotion of the user. As a result of monitoring, if an emotional type does not change and the emotional intensity change exceeds a first threshold, the controller 1300 may update the emotional expression information and the emotional stimulus source information. The controller 1300 may replace the emotional expression information and the emotional stimulus source information that are previously stored in the memory 1700 with the updated emotional expression information and emotional stimulus source information. If the emotional intensity change exceeds a second threshold that is greater than the first threshold, the controller 1300 may preserve the emotional expression information and the emotional stimulus source information that are previously stored in the memory 1700 and may newly store the updated emotional expression information and emotional stimulus source information in the memory 1700.

The controller 1300 may normalize an emotional intensity.

The controller 1300 may acquire emotional managing recommendation information based on the emotional expression information and the emotional stimulus source information.

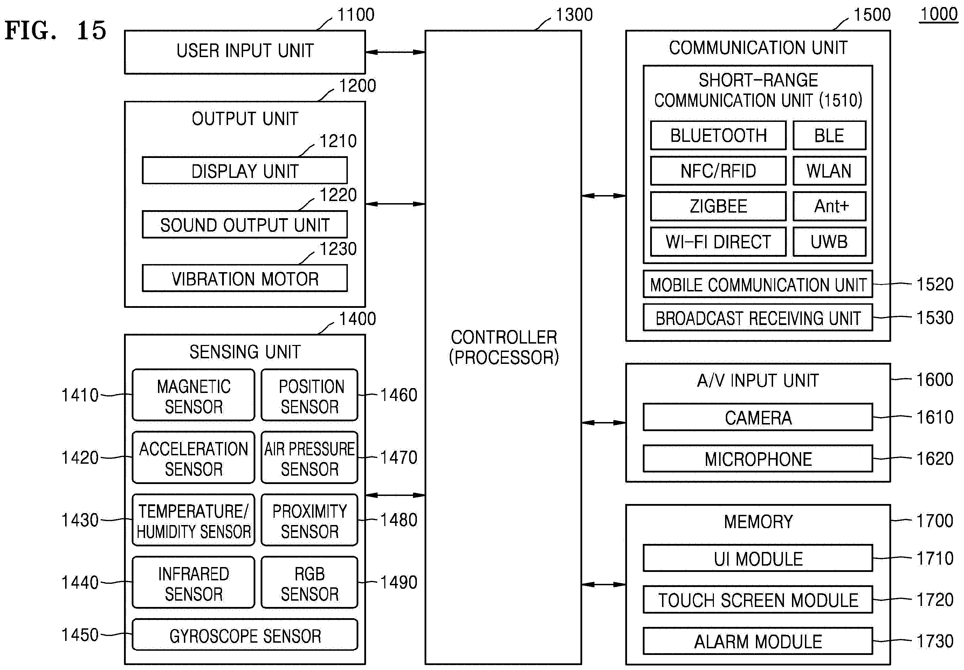

FIG. 15 is a block diagram illustrating another configuration of the electronic apparatus 1000 of FIG. 14. The configuration of the electronic apparatus 1000 of FIG. 15 can be wholly applied to the apparatuses for monitoring emotions described above.

Referring to FIG. 15, the electronic apparatus 1000 may include a user input unit 1100, an output unit 1200, a controller 1300, and a communication unit 1500. However, not all elements shown in FIG. 15 are indispensable elements of the electronic apparatus 1000. That is, the electronic apparatus 1000 may be embodied with more or less elements than the elements shown in FIG. 15.

The electronic apparatus 1000 may further include a sensing unit 1400, an audio/video (A/V) input unit 1600, and a memory 1700, in addition to the user input unit 1100, the output unit 1200, the controller 1300, and the communication unit 1500.

The controller 1300 may acquire emotional expression information indicating an emotion of a user. The controller 1300 may acquire emotional stimulus source information indicating a cause of the emotion. The controller 1300 may correlate the emotional expression information with the emotional stimulus source information and store the correlated emotional expression information and emotional stimulus source information in the memory 1700.

The controller 1300 may acquire the emotional stimulus source information based on at least one of multimedia information, environmental information and physiological signal information of the user. The multimedia information includes at least one of text information, image information, audio information, and video information.

The controller 1300 may acquire the emotional expression information based on at least one of the multimedia information and the physiological signal information.

The controller 1300 may acquire at least one of the multimedia information, the environmental information and the physiological signal information of the user through the user input unit 1100, the output unit 1200, the sensing unit 1400, the communication unit 1500, and the A/V input unit 1600.

The multimedia information may be received through the user input unit 1100 or the communication unit 1500 and may be output from the output unit 1200. Also, the multimedia information may be acquired through the A/V input unit 1600. The environmental information or the physiological signal information of the user may be acquired from the sensing unit 1400.

The user input unit 1100 refers to means by which a user inputs data for controlling the electronic apparatus 1000. For example, the user input unit 110 may include a key pad, a dome switch, a touch pad (a touch capacitive type touch pad, a pressure resistive type touch pad, an infrared beam sensing type touch pad, a surface acoustic wave type touch pad, an integral strain gauge type touch pad, a piezo effect type touch pad, or the like), a jog wheel, a jog switch, etc., but is not limited thereto.

The user input unit 1100 may receive multimedia information input by the user. The controller 1300 may acquire emotional expression information and emotional stimulus source information of the user based on the multimedia information received through the user input unit 1100.

The user input unit 1100 may receive a command that instructs an execution of emotional monitoring. Specifically, the user input unit 1100 may receive the command that instructs an execution of an emotional monitoring program by the user. After receiving the command, the electronic apparatus 1000 may perform an operation of monitoring emotions.

The output unit 1200 may output audio information, video information, or a vibration signal. The output unit 1200 may include the display unit 1210, a sound output unit 1220, and a vibration motor 1230. The controller 1300 may acquire emotional expression information and emotional stimulus source information about emotions of the user based on the audio information or the video information that is output by the output unit 1200.

The output unit 1200 may output the emotional expression information and the emotional stimulus source information. Also, the output unit 1200 may output emotional managing recommendation information.

The display unit 1210 displays and outputs information processed by the electronic apparatus 1000. When the display unit 1210 and a touch pad form a layer structure and then are formed as a touch screen, the display unit 1210 may be used as both an output apparatus and an input apparatus. The display unit 1210 may include at least one of a liquid crystal display (LCD), a thin film transistor-liquid crystal display (TFT-LCD), an organic light-emitting diode (OLED) display, a flexible display, a three-dimensional (3D) display, and an electrophoretic display. Also, according to a type of the electronic apparatus 1000, the electronic apparatus 1000 may include at least two display units 1210. Here, the at least two display units 1210 may be disposed to face each other by using a hinge.

The controller 1300 may display the emotional expression information and the emotional stimulus source information on the display unit 1210. The controller 1300 may display content indicating an emotion of the user over time on the display unit 1210.

The user input unit 1100 may receive a user input that selects a specific time from the content. The controller 1300 may display emotional expression information and emotional stimulus source information that are related to the selected time on the display unit 1210.

The sound output unit 1220 outputs audio information that is received from the communication unit 1500 or is stored in the memory 1700. Also, the sound output unit 1220 outputs a sound signal (e.g., a call signal receiving sound, a message receiving sound, a notifying sound, or the like) related to capabilities performed by the electronic apparatus 1000. The sound output unit 1220 may include a speaker, a buzzer, or the like.

The vibration motor 1230 may output a vibration signal. For example, the vibration motor 1230 may output the vibration signal that corresponds to an output of the audio information (e.g., the call signal receiving sound, the message receiving sound, or the like) or the video information. Also, when a touch is input to the touch screen, the vibration motor 1230 may output the vibration signal.

The controller 1300 may generally control all operations of the electronic apparatus 1000. The controller 1300 may control the electronic apparatus 1000 for performing operations of the electronic apparatus of the drawings described above (for example, 100 of FIG. 1). For example, the controller 1300 may execute programs stored in the memory 1700, thereby generally controlling the user input unit 1100, the output unit 1200, the sensing unit 1400, the communication unit 1500, and the A/V input unit 1600, etc. The sensing unit 1400 may sense a state of the electronic apparatus 1000, a state around the electronic apparatus 1000, or a state of the user and transfer sensed information to the controller 1300.

The sensing unit 1400 may include at least one selected from a magnetic sensor 1410, an acceleration sensor 1420, a temperature/humidity sensor 1430, an infrared sensor 1440, a gyroscope sensor 1450, a position sensor (e.g., GPS) 1460, an air pressure sensor 1470, a proximity sensor 1480 and an RGB sensor (i.e., a luminance sensor) 1490, but is not limited thereto. Functions of the sensors may be intuitionally deduced by one of ordinary skill in the art by referring to names of the sensors, and thus, detailed descriptions thereof are omitted here.

The sensing unit 1400 may acquire environmental information used to acquire the emotional expression information or the emotional stimulus source information. The environmental information includes at least one of time information, location information, weather information, temperature information and humidity information.

The sensing unit 1400 may further include a physiological signal sensor that acquires physiological signal information of the user. The physiological signal sensor may acquire, for example, heart rate, electrocardiogram, skin conductance, body temperature, blood pressure, etc.

The communication unit 1500 may include one or more elements to communicate with a cloud, a server and/or another electronic apparatus. A second user associated with the user may be a user of another electronic apparatus. For example, the communication unit 1500 may include a short-range communication unit 1510, a mobile communication unit 1520, and a broadcast receiving unit 1530.

The short-range communication unit 1510 may include, but is not limited thereto, a Bluetooth communication part, a Bluetooth Low Energy (BLE) communication part, a near field wireless communication part, a wireless local area network (WLAN) communication part, a ZigBee communication part, an infrared Data Association (IrDA) communication part, a Wi-Fi Direct (WFD) communication part, an ultra wideband (UWB) communication part, or an Ant+ communication part.

The mobile communication unit 1520 exchanges a wireless signal with at least one selected from a base station, an external terminal, and a server on a mobile communication network. In this regard, the wireless signal may include various types of data according to communication in regard to a sound call signal, a video call signal, or a text/multimedia message.

The broadcast receiving unit 1530 receives a broadcast signal and/or information related to broadcast from the outside through a broadcast channel. The broadcast channel may include a satellite channel and a ground wave channel. According to an implementation, the electronic apparatus 1000 may not include the broadcast receiving unit 1530.

The controller 1300 may control the communication unit 1500 to share emotion related information that is at least one of the emotional expression information and the emotional stimulus source information with the second user associated with the user.

For example, the controller 1300 may transmit the emotion related information to at least one of a cloud or a server that the second user can access and a second electronic apparatus used by the second user through the communication unit 1500. Also, the controller 1300 may receive the emotion related information shared by the second user through the communication unit 1500. As such, the electronic apparatus 1000 may share the emotion related information with the second user by using the communication unit 1500.

The controller 1300 may acquire at least one of second emotional expression information indicating an emotion of the second user associated with the user and second emotional stimulus source information indicating a cause of the emotion of the second user based on the multimedia information. The controller 1300 may control the communication unit 1500 to share at least one of the second emotional expression information and the second emotional stimulus source information with the second user.

The controller 1300 may receive at least one of third emotional expression information indicating an emotion of the user and third emotional stimulus source information corresponding to the third emotional expression information, shared by the second user, through the communication unit 1500. The communication unit 1500 may combine the emotional expression information and the emotional stimulus source information and at least one of the third emotional expression information and the third emotional stimulus source information.

The A/V input unit 1600 may receive an input of an audio signal or a video signal and may include a camera 1610 and a microphone 1620. The camera 1610 may obtain an image frame such as a still image or a moving picture via an image sensor during a video call mode or an image-capturing mode. An image that is captured via the image sensor may be processed by the controller 1300 or a separate image processing unit (not shown).

The image frame that is processed by the camera 1610 may be stored in the memory 1700 or may be transmitted to an external source via the communication unit 1500. According to a configuration of a terminal, two or more cameras 1610 may be arranged.

The microphone 1620 receives an input of an external sound signal and processes the received sound signal into electrical voice data. For example, the microphone 1620 may receive a sound signal from an external electronic apparatus or a speaker. In order to remove noise that occurs while the sound signal is externally input, the microphone 1620 may use various noise removing algorithms.

The camera 1610 may photograph the user and acquire image information. The camera 1610 and the microphone 1620 may photograph the user and acquire video information. The microphone 1620 may acquire audio information about a voice of the user. As such, the A/V input unit 1600 may acquire multimedia information that may include at least one of image information, video information, and audio information. The controller 1300 may acquire the emotional expression information or the emotional stimulus source information based on the multimedia information acquired through the A/V input unit 1600.

The memory 1700 may store a program for processing and controlling the controller 1300, and may store data that is input to or output from the electronic apparatus 1000.

The memory 1700 may include a storage medium of at least one type selected from a flash memory, a hard disk, a multimedia card type memory, a card type memory such as an SD or XD card memory, a random access memory (RAM), a static random access memory (SRAM), a read-only memory (ROM), an electrically erasable programmable read-only memory (EEPROM), a programmable read-only memory (PROM), a magnetic memory, a magnetic disc, and an optical disc.

The programs stored in the memory 1700 may be classified into a plurality of modules according to their functions, for example, a user interface (UI) module 1710, a touch screen module 1720, an alarm module 1730, etc.

The UI module 1710 may provide a specialized UI or a GUI in connection with the electronic apparatus 1000 for each application. The touch screen module 1720 may detect a user's touch gesture on a touch screen and transmit information related to the touch gesture to the controller 1300. In some embodiments, the touch screen module 1720 may recognize and analyze a touch code. The touch screen module 1720 may be configured by using additional hardware including a controller.

Various sensors may be arranged in or near the touch screen so as to detect a touch or a proximate touch on the touch sensor. An example of the sensor to detect the touch on the touch screen may include a tactile sensor. The tactile sensor detects a contact of a specific object at least as sensitively as a person can detect. The tactile sensor may detect various types of information such as the roughness of a contact surface, the hardness of the contact object, the temperature of a contact point, or the like.

An example of the sensor to detect the touch on the touch screen may include a proximity sensor.

The proximity sensor detects the existence of an object that approaches a predetermined detection surface or exists nearby by using a force of an electro-magnetic field or an infrared ray, instead of a mechanical contact. Examples of the proximity sensor include a transmission-type photoelectric sensor, a direction reflection-type photoelectric sensor, a mirror reflection-type photoelectric sensor, a high frequency oscillation-type proximity sensor, a capacity-type proximity sensor, a magnetic proximity sensor, an infrared-type proximity sensor, or the like. The touch gesture (i.e., an input) of the user may include a tap gesture, a touch & hold gesture, a double tap gesture, a drag gesture, a panning gesture, a flick gesture, a drag & drop gesture, a swipe gesture, or the like.

The alarm module 1730 may generate a signal for notifying the user of an occurrence of an event in the device 1000. Examples of the event that occurs in the device 1000 may include a call signal reception, a message reception, a key signal input, schedule notification, or the like. The alarm module 1730 may output a video-format alarm signal via a display unit 1210, may output an audio-format alarm signal via the sound output unit 1220, or a vibration signal via the vibration motor 1230.

In another aspect, the application further provides a computer-readable storage medium, which may be a computer-readable storage medium comprised in the apparatus of the above embodiment or a computer-readable storage medium which is separate and not installed in a terminal. The computer-readable storage medium stores one or more program which is executed by one or more processor to implement the method of monitoring an emotion of the application.

Although the descriptions disclosed herein are presently considered to be prefer embodiments and explain the principle of the invention, it will be appreciated by those of ordinary skill in the art that the scope of the invention is not limited to technical solutions constituted of combinations between one and the others of the above technical features, but intended to cover other technical solutions constituted of any combinations between one and the others of the above technical features or equivalents thereof, such as a technical solution constituted of any combination between one and the others of technical features with similar functions to the above technical features, without departing from the scope of the invention.

## Claims

1. An electronic apparatus comprising:
a memory;
a display unit; and
a controller configured to acquire emotional expression information indicating an emotion of a user, acquire emotional stimulus source information indicating a cause of the emotion, correlate the emotional expression information with the emotional stimulus source information, store the correlated emotional expression information and emotional stimulus source information in the memory, and display the emotional expression information and the emotional stimulus source information on the display unit.

2. The electronic apparatus of claim 1, wherein the controller displays content indicating emotions of the user over time on the display unit.

3. The electronic apparatus of claim 2, further comprising: a user input unit configured to receive a user input selecting a specific time from the content,
wherein the controller displays the emotional expression information and the emotional stimulus source information that are related to the selected time on the display unit.

4. The electronic apparatus of claim 1, wherein the controller acquires the emotional stimulus source information based on at least one of multimedia information, environmental information, and physiological signal information of the user, and
wherein the multimedia information comprises at least one of text information, image information, audio information and video information.

5. The electronic apparatus of claim 4, wherein the controller acquires the emotional expression information based on at least one of the multimedia information and the physiological signal information.

6. The electronic apparatus of claim 4, further comprising: a communication unit configured to communicate with at least one of a server and a second electronic apparatus used by a second user,
wherein the controller acquires at least one of second emotional expression information indicating an emotion of the second user associated with the user and second emotional stimulus source information indicating a cause of the emotion of the second user based on the multimedia information and controls the communication unit to share at least one of the second emotional expression information and the second emotional stimulus source information with the second user.

7. The electronic apparatus of claim 6, wherein the controller receives at least one of third emotional expression information indicating an emotion of the user and third emotional stimulus source information corresponding to the third emotional expression information, shared by the second user, through the communication unit and combines the emotional expression information and the emotional stimulus source information and at least one of the third emotional expression information and the third emotional stimulus source information.

8. The electronic apparatus of claim 1, wherein, after storing the correlated emotional expression information and emotional stimulus source information in the memory, the controller monitors a change of an emotional type and a change of an emotional intensity regarding the emotion of the user, and, if the emotional type does not change and the change of the emotional intensity exceeds a threshold, updates the emotional expression information and the emotional stimulus source information.

9. The electronic apparatus of claim 8, wherein the controller normalizes the emotional intensity.

10. The electronic apparatus of claim 1, wherein the controller acquires emotional managing recommendation information based on the emotional expression information and the emotional stimulus source information and displays the emotional managing recommendation information on the display unit.

11. A method of operating an electronic apparatus, the method comprising:
acquiring emotional expression information indicating an emotion of a user;
acquiring emotional stimulus source information indicating a cause of the emotion;
correlating the emotional expression information with the emotional stimulus source information;
storing the correlated emotional expression information and emotional stimulus source information; and
displaying the emotional expression information and the emotional stimulus source information.

12. The method of claim 11, further comprising: displaying content indicating emotions of the user over time.

13. The method of claim 12, further comprising: receiving a user input selecting a specific time from the content,
wherein the displaying of the emotional expression information and the emotional stimulus source information comprises: displaying the emotional expression information and the emotional stimulus source information that are related to the selected time.

14. The method of claim 11, wherein the acquiring of the emotional stimulus source information comprises: acquiring the emotional stimulus source information based on at least one of multimedia information, environmental information, and physiological signal information of the user, and
wherein the multimedia information comprises at least one of text information, image information, audio information and video information.

15. The method of claim 14, wherein the acquiring of the emotional expression information comprises: acquiring the emotional expression information based on at least one of the multimedia information and the physiological signal information.

16. The method of claim 14, further comprising:
acquiring at least one of second emotional expression information indicating an emotion of a second user associated with the user and second emotional stimulus source information indicating a cause of the emotion of the second user, based on the multimedia information; and
sharing at least one of the second emotional expression information and the second emotional stimulus source information with the second user.

17. The method of claim 16, further comprising:
receiving at least one of third emotional expression information indicating an emotion of the user and third emotional stimulus source information corresponding to the third emotional expression information, shared by the second user; and
combining the emotional expression information and the emotional stimulus source information and the at least one of the third emotional expression information and the third emotional stimulus source information.

18. The method of claim 11, further comprising:
after storing the correlated emotional expression information and emotional stimulus source information in the memory, monitoring a change of an emotional type and a change of an emotional intensity regarding the emotion of the user; and
if the emotional type does not change and the change of the emotional intensity exceeds a threshold, updating the emotional expression information and the emotional stimulus source information.

19. The method of claim 11, further comprising:
acquiring emotional managing recommendation information based on the emotional expression information and the emotional stimulus source information; and
displaying the emotional managing recommendation information.

20. A computer-readable recording medium having recorded thereon a program, which, when executed by a computer, performs the method of claim 11, by using a computer.
